# FASCICULE DE BREVET EUROPEEN

(11) **EP 2 306 167 B1**
(45) Date de publication et mention de la délivrance du brevet: **29.07.2015**
(21) Numéro de dépôt: 10185175.6
(22) Date de dépôt: 01.10.2010
(51) Int. Cl.: G01K 5/48, G01K 7/22

(54) **Dispositif de détection de variations de température dans une puce**
Vorrichtung zur Feststellung von Temperaturschwankungen in einem Chip
Device for the detection of temperature variations in a chip

(30) Priorité: 02.10.2009 FR 0956876
(43) Date de publication de la demande: 06.04.2011
(73) Titulaire: STMicroelectronics (Rousset) SAS, 13790 Rousset (FR)
(72) Inventeur: Rivero, Christian, 13080 LUYNES (FR)
(74) Mandataire: de Beaumont, Michel

(56) Documents cités:
- JP-A- 58 033 136
- US-A- 2 990 529
- US-A- 3 403 558
- US-A- 5 444 219

## Description

### Domaine de l'invention

La présente invention concerne un dispositif de mesure de la température du substrat d'une puce de circuit intégré.

### Exposé de l'art antérieur

Dans de nombreux systèmes électroniques, on souhaite pouvoir mesurer, en fonctionnement, la température interne d'une puce de circuit intégré. On souhaite notamment détecter d'éventuelles élévations anormales de la température de la puce.

On a proposé de réaliser des dispositifs de mesure de température basés sur l'observation des variations de la valeur d'une résistance formée dans le substrat d'une puce. En effet, le silicium ayant des propriétés piézorésistives, la valeur d'une résistance formée dans un substrat de silicium dépend des contraintes mécaniques subies par le substrat. Les variations de température entraînant des variations de contraintes dans le substrat, il en résulte que la valeur de la résistance est liée à la température du substrat.

Un inconvénient des dispositifs de mesure de température de ce type est qu'ils sont peu précis, notamment en raison des imprécisions des procédés de fabrication de résistance. En effet, à température égale, on observe des écarts de valeur entre des résistances formées dans des puces distinctes d'une même tranche semiconductrice, et a fortiori entre des résistances formées dans des puces distinctes de tranches semiconductrices différentes.

JP 58 033 136, US 3403 558, US 2 990 529 et US 5 444 219 décrient des dispositifs connus.

### Résumé

Ainsi, un objet de la présente invention est de proposer un dispositif de mesure de la température du substrat d'une puce de circuit intégré palliant au moins certains des inconvénients des solutions de l'art antérieur.

Un objet de la présente invention est de proposer une telle structure permettant une mesure précise de la température.

Un objet de la présente invention est de proposer une telle structure réalisable en utilisant uniquement des étapes de fabrication nécessaires à la fabrication de circuits intégrés CMOS.

Ainsi, la présente invention comme définie dans la revendication 1 prévoit un dispositif de détection de variations de température du substrat d'une puce de circuit intégré, comportant, dans le substrat, des résistances implantées reliées en un pont de Wheatstone, dans lequel chacune de deux premières résistances opposées du pont est recouverte d'un réseau de lignes métalliques parallèles à une première direction, la première direction étant telle qu'une variation des contraintes du substrat selon cette direction entraine une variation de la valeur de déséquilibre du pont.

Selon un mode de réalisation de la présente invention, chacune des deux secondes résistances opposées du pont est recouverte d'un réseau de lignes métalliques parallèles à une seconde direction orthogonale à la première direction.

Selon un mode de réalisation de la présente invention, les deux premières résistances opposées ont la forme, en vue de dessus, de barreaux rectangulaires parallèles, les lignes métalliques s'étendant selon la longueur des barreaux.

Selon un mode de réalisation de la présente invention, les résistances implantées ont, en vue de dessus, une forme carrée.

Selon un mode de réalisation de la présente invention, les résistances implantées comportent une région dopée d'un premier type de conductivité formée dans une région du second type de conductivité.

Selon un mode de réalisation de la présente invention, les lignes métalliques sont en cuivre.

Selon un mode de réalisation de la présente invention, les lignes métalliques sont en aluminium.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 représente le schéma électrique d'un pont de Wheatstone ;
les figures 2A et 2B sont des vues en coupe et de dessus représentant de façon schématique un mode de réalisation d'une résistance ;
les figures 3A et 3B sont des vues en coupe et de dessus représentant de façon schématique un autre mode de réalisation d'une résistance particulièrement sensible aux variations de température;
la figure 4 est une vue de dessus schématique d'un mode de réalisation d'un dispositif de mesure de la température du substrat d'une puce de circuit intégré ; et
la figure 5 est une vue de dessus schématique d'une variante de réalisation d'un dispositif de mesure de la température du substrat d'une puce de circuit intégré.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

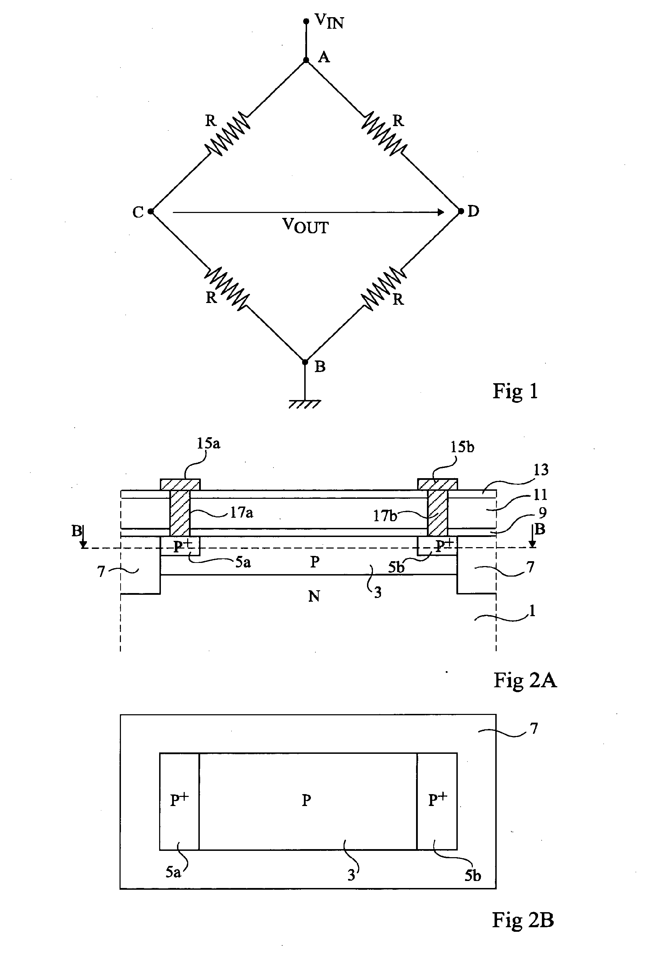

La figure 1 représente le schéma électrique d'un pont de Wheatstone constitué de quatre résistances R, par exemple de mêmes valeurs. A une première diagonale du pont, entre des noeuds A et B, est appliquée une tension V_{IN}. A une deuxième diagonale du pont, entre des noeuds C et D, apparaît une éventuelle tension de déséquilibre V_{OUT}.

Les résistances étant de même valeur, le pont de Wheatstone est normalement équilibré et la tension de sortie V_{OUT} est proche de 0 V quelle que soit la valeur de V_{IN}. De plus, la tension de sortie V_{OUT} est indépendante d'éventuelles variations de température. En effet, bien que les valeurs des résistances soient susceptibles de varier avec la température, la dérive subie est sensiblement la même pour toutes les résistances du pont. Ainsi, l'équilibrage reste inchangé.
La figure 2A est une vue en coupe représentant de façon schématique une résistance implantée formée dans un substrat semiconducteur, par exemple en silicium.
La figure 2B est une vue de dessus d'une coupe selon le plan B-B de la figure 2A.

Dans la partie supérieure d'une région de substrat 1 faiblement dopée de type N, est formée une région 3 dopée de type P. Dans cet exemple, la région 3 a, en vue de dessus, la forme d'un barreau rectangulaire. Aux extrémités du barreau rectangulaire, dans la partie supérieure de la région 3, il est prévu des régions de contact 5a et 5b fortement dopées de type P. Une région d'oxyde 7 est disposée en périphérie de la région 3 de façon à délimiter la résistance.

Dans cet exemple, la résistance est recouverte par un empilement d'une couche de nitrure 9, d'une couche d'oxyde 11, et d'une couche de nitrure 13. Au dessus de la couche supérieure de nitrure 13, il est prévu des plots de contact métalliques 15a et 15b, reliés aux régions de contact 5a et 5b par des vias 17a et 17b traversant les couches 9, 11 et 13.

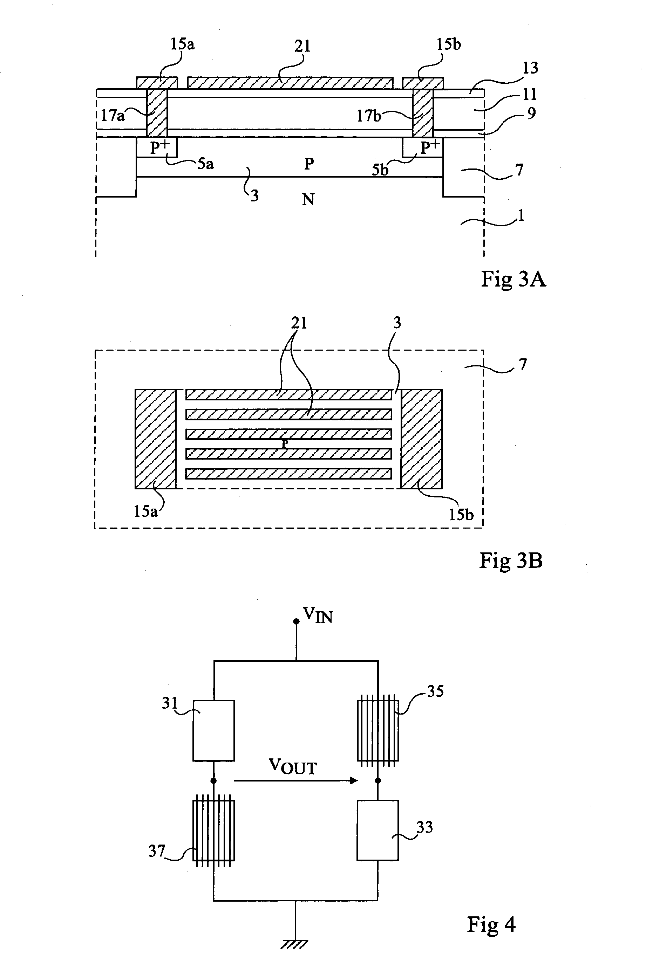

La figure 3A est une vue en coupe représentant de façon schématique un autre mode de réalisation d'une résistance implantée.
La figure 3B est une vue de dessus de la figure 3A.

La structure représentée est identique à celle décrite en relation avec les figures 2A et 2B, à la différence qu'on prévoit, au dessus de la résistance, un réseau 21 de lignes métalliques parallèles non connectées, par exemple des lignes de cuivre ou d'aluminium. Dans cet exemple, les lignes métalliques sont longitudinales, c'est-à-dire qu'elles s'étendent parallèlement à la longueur de la région résistive 3, entre les plots de contact 15a et 15b.

La présence du réseau 21 de lignes métalliques accentue fortement la sensibilité de la résistance aux variations de température. En effet, les lignes métalliques ont un coefficient de dilatation thermique bien supérieur à celui du silicium. A titre d'exemple, le coefficient de dilatation thermique du cuivre est de l'ordre de 16,5 x 10⁻⁶ °C⁻¹, et celui du silicium est de l'ordre de 3,5 x 10⁻⁶ °C⁻¹. La déformation cristalline du métal produit des contraintes dans la structure de silicium. Ainsi, les variations de contrainte liées aux variations de température sont fortement amplifiées dans la région résistive 3. Il en résulte une forte sensibilité de la résistance à la température, si la direction de contrainte correspond à un axe cristallographique convenablement choisi de la structure cristalline du silicium, comme on le précisera ci-après.

Pour maximiser la sensibilité de la résistance aux variations de température, les lignes métalliques sont de préférence disposées le plus près possible de la région 3. Elles correspondent par exemple au premier niveau de métallisation d'une puce de circuit intégré. De plus, on prévoit de préférence un réseau dense de lignes fines. En effet, la prévision de lignes fines, par opposition à des lignes larges ou à une plaque métallique continue, permet d'obtenir une variation des contraintes directionnelles dans le substrat, c'est-à-dire s'étendant principalement selon une même direction, celle des lignes de métal. De plus, cette variation est sensiblement linéaire en fonction de la température.

A titre d'exemple, la région d'oxyde 7 délimitant la résistance peut avoir une épaisseur de l'ordre de 350 nm, la région de nitrure 9 peut avoir une épaisseur de l'ordre de 50 nm, la région isolante 11 peut avoir une épaisseur de l'ordre de 500 nm, la région de nitrure 13 peut avoir une épaisseur de l'ordre de 30 nm, et les lignes métalliques 21 peuvent avoir une épaisseur de l'ordre de 300 nm et une largeur de l'ordre de 100 nm. Dans la pratique, on pourra choisir la largeur de ligne minimale autorisée par la technologie de fabrication choisie.

La figure 4 est une vue de dessus schématique d'un mode de réalisation d'un dispositif de mesure de la température du substrat d'une puce de circuit intégré. Ce dispositif, formé dans le substrat de la puce, comporte un pont de Wheatstone constitué de quatre résistances 31, 33, 35, 37. Les résistances opposées 31, 33 sont des résistances implantées formées de la façon décrite en relation avec les figures 2A et 2B. Les résistances opposées 35, 37 sont des résistances implantées surmontées d'un réseau de lignes métalliques, tel que décrit en relation avec les figures 3A et 3B.

Les variations de température du substrat affectent différemment les résistances 35, 37 surmontées de lignes métalliques et les résistances 31, 33 non surmontées de lignes métalliques. Ainsi, une variation de température provoque une variation de la valeur de déséquilibre du pont. A titre d'exemple, on observe une variation de la tension de sortie V_{OUT} de l'ordre de 5 à 10 % lorsque la température du substrat passe de 25°C à 100°C. La mesure de la tension de sortie V_{OUT} du pont de Wheatstone permet donc de déterminer la température du substrat.

Selon une variante de réalisation, au lieu de prévoir, sur les résistances opposées 35 et 37, un réseau de lignes métalliques longitudinales tel que décrit en relation avec les figures 3A et 3B, on peut prévoir un réseau de lignes métalliques transverses, c'est-à-dire s'étendant selon la largeur de la région résistive.

A titre de comparaison, on considère deux résistances identiques de forme carrée (en vue de dessus), la première résistance étant recouverte d'un réseau de lignes métalliques verticales, et la seconde résistance étant recouverte d'un réseau de lignes métalliques horizontales. On considère en outre que, mis à part l'orientation de lignes, les deux réseaux métalliques sont identiques. Pour une variation de température donnée, la variation de la première résistance est de même amplitude que la variation de la seconde résistance, mais de sens opposé.

Toutefois, on notera que dans un substrat de silicium monocristallin, les variations de contrainte dans le substrat sont susceptibles d'affecter différemment des résistances orientées selon des axes cristallographiques différents. On veillera à orienter les résistances et les lignes métalliques de façon que les variations de contrainte dans le silicium liées aux variations de contrainte dans les lignes métalliques aient une influence maximale sur la valeur de la résistance.

A titre d'exemple, on considère ici un substrat de silicium monocristallin dont la face principale est dans un plan cristallin [001], c'est-à-dire un plan orthogonal à la direction cristalline (001), et des résistances 31, 33, 35, 37 de type P. Les résistances 31, 33, 35, 37 sont parallèles entre elles et sont orientées, en notation de Miller, selon la direction (110). Les lignes métalliques disposées au dessus des résistances 35 et 37 peuvent être longitudinales ou transverses. Dans le cas de résistances de type N, on choisira pour les résistances 31, 33, 35, 37, une même orientation faisant un angle de 45° avec la direction (110).

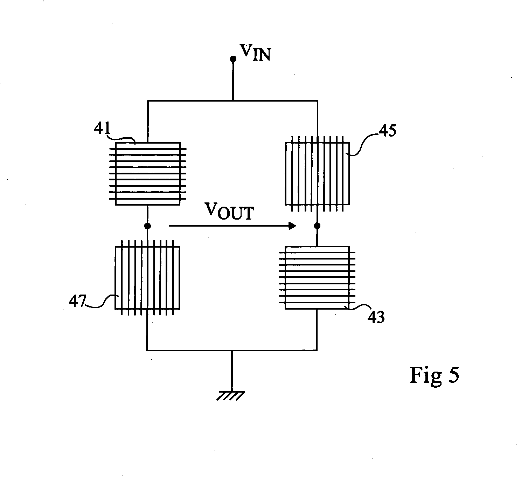

La figure 5 est une vue de dessus schématique d'une variante de réalisation d'un dispositif de mesure de la température du substrat d'une puce de circuit intégré. Comme le dispositif de la figure 4, ce dispositif comporte un pont de Wheatstone constitué de quatre résistances implantées 41, 43, 45, 47. Dans cet exemple, les résistances 41, 43, 45, 47 sont identiques et de forme carrée (en vue de dessus). Chaque résistance est recouverte d'un réseau de lignes métalliques, tel que décrit en relation avec les figures 3A et 3B. Les résistances opposées 41 et 43 sont recouvertes d'un réseau de lignes métalliques transverses. Les résistances opposées 45 et 47 sont recouvertes d'un réseau de lignes longitudinales.

Les variations des résistances 41 et 43 liées aux variations de température du substrat sont de même amplitude que les variations des résistances 45 et 47, mais de signe opposé.

Ainsi, une variation de température entraîne une variation de la valeur de déséquilibre du pont nettement plus marquée que dans le cas décrit en relation avec la figure 4 pour lequel seules deux résistances du pont sont recouvertes d'un réseau de lignes métalliques. A titre d'exemple, on observe une variation de la tension de sortie V_{OUT} de l'ordre de 15 % à 25 % lorsque la température du substrat passe de 25°C à 100°C.

Un avantage de l'utilisation d'un pont de Wheatstone dans un dispositif de mesure de la température du substrat d'une puce est qu'il permet une mesure précise et sensiblement indépendante des imprécisions du procédé de fabrication. En effet, les quatre résistances d'un pont de Wheatstone sont formées simultanément dans une même région très localisée d'une tranche semiconductrice. On peut donc considérer que, parmi les quatre résistances d'un même pont, les dispersions de fabrication sont négligeables. Ainsi, bien que d'un pont à l'autre on observe des écarts de valeurs de résistance, les valeurs V_{OUT} de déséquilibre sont, à températures égales, sensiblement identiques.

Un autre avantage du dispositif proposé est que sa réalisation n'implique pas d'étapes supplémentaires par rapport aux procédés de fabrication traditionnels.

Des modes de réalisation particuliers de la présente invention ont été décrits. Diverses variantes et modifications apparaîtront à l'homme de l'art dans le cadre de l'étendue de protection définie dans les revendications.

En particulier, on a mentionné ci-dessus la prévision de lignes métalliques de cuivre ou d'aluminium au dessus de certaines résistances. L'invention ne se limite pas à ces métaux particuliers. L'homme de l'art saura mettre en oeuvre le fonctionnement recherché en utilisant tout autre métal ou éventuellement tout autre matériau adapté, présentant un coefficient de dilatation thermique différent de celui du substrat.

En outre, on a donné ci-dessus des exemples, en notation de Miller, d'orientation des résistances et des lignes métalliques surmontant les résistances, par rapport à l'orientation cristalline du substrat. L'invention ne se limite bien entendu pas à ces exemples particuliers. L'homme de l'art saura choisir d'autres orientations adaptées.

De même, dans les exemples décrits ci-dessus en relation avec les figures 2A, 2B, 3A, 3C, les résistances comprennent une région de silicium dopée de type P formée dans une région faiblement dopée de type N. L'homme de l'art saura mettre en oeuvre le fonctionnement recherché en inversant les types de conductivité. Il saura alors choisir des orientations adaptées pour les résistances et les lignes métalliques. On saura également mettre en oeuvre le fonctionnement recherché pour d'autres structures de résistances.

Par ailleurs, on a proposé ci-dessus de former les réseaux de lignes métalliques du dispositif au premier niveau de métallisation d'une puce de circuit intégré. On pourra bien entendu former les lignes métalliques à tout autre niveau, par exemple au premier niveau de vias. Toutefois, plus les lignes de métal sont proches de la région résistive, plus la sensibilité du dispositif aux variations de température est importante.

## Revendications

1. Dispositif de détection de variations de température du substrat d'une puce de circuit intégré, comportant, dans le substrat, des résistances implantées (31, 33, 35, 37 ; 41, 43, 45, 47) reliées en un pont de Wheatstone, dans lequel chacune de deux premières résistances (35, 37 ; 45, 47) opposées du pont est recouverte d'un réseau (21) de lignes métalliques parallèles à une première direction, la première direction étant telle qu'une variation des contraintes du substrat selon cette direction entraine une variation de la valeur de déséquilibre (V_{OUT}) du pont.

2. Dispositif selon la revendication 1, dans lequel chacune des deux secondes résistances (41, 43) opposées du pont est recouverte d'un réseau de lignes métalliques parallèles à une seconde direction orthogonale à la première direction.

3. Dispositif selon la revendication 1, dans lequel les deux premières résistances opposées (35, 37) ont la forme, en vue de dessus, de barreaux rectangulaires parallèles, les lignes métalliques (21) s'étendant selon la longueur desdits barreaux.

4. Dispositif selon la revendication 2, dans lequel les résistances implantées (41, 43, 45, 47) ont, en vue de dessus, une forme carrée.

5. Dispositif selon l'une quelconque des revendications 1 à 4, dans lequel les résistances implantées comportent une région dopée d'un premier type de conductivité formée dans une région du second type de conductivité.

6. Dispositif selon l'une quelconque des revendications 1 à 5, dans lequel les lignes métalliques sont en cuivre.

7. Dispositif selon l'une quelconque des revendications 1 à 5, dans lequel les lignes métalliques sont en aluminium.

## Patentansprüche

1. Eine Vorrichtung zur Detektierung von Temperaturveränderungen des Substrats eines integrierten Schaltungschips, wobei in dem Substrat folgendes vorgesehen ist: implantierte Widerstände (31, 33, 35, 37; 41, 43, 45, 47) verbunden als eine Wheatstone'sche Brücke, wobei jeder der zwei ersten gegenüberliegenden bzw. entgegengesetzten Widerstände (35, 37; 45, 47) der Brücke abgedeckt sind mit einer Anordnung (21) aus Metallleitungen parallel zu einer ersten Richtung, wobei die erste Richtung derart vorgesehen ist, dass eine Veränderung in der Substratbeanspruchung längs dieser Richtung eine Veränderung des Nicht-Gleichgewichtswertes (V_{OUT}) der Brücke bewirkt.

2. Die Vorrichtung nach Anspruch 1, wobei jeder der zweiten entgegengesetzten Widerstände (41, 43) der Brücke mit einer Anordnung von Metallleitungen parallel zu einer zweiten Richtung orthogonal zur ersten Richtung abgedeckt ist.

3. Die Vorrichtung nach Anspruch 1, wobei die ersten zwei entgegengesetzten Widerstände (35, 37) in Draufsicht die Form paralleler rechtwinkliger Stangen besitzen, und wobei sich die Metallleitungen (21) entlang der Länge der erwähnten Stangen erstrecken.

4. Die Vorrichtung nach Anspruch 2, wobei die implantierten Widerstände (41, 43, 45, 47) in Draufsicht eine quadratische Form besitzen.

5. Die Vorrichtung nach einem der Ansprüche 1 bis 4, wobei die implantierten Widerstände eine dotierte Zone eines ersten Leitfähigkeitstyps gebildet in einer Zone des zweiten Leitfähigkeitstyps aufweisen.

6. Die Vorrichtung nach einem der Ansprüche 1 bis 5, wobei die Metallleitungen aus Kupfer hergestellt sind.

7. Die Vorrichtung nach einem der Ansprüche 1 bis 5, wobei die Metallleitungen aus Aluminium hergestellt sind.

## Claims

1. A device for detecting temperature variations of the substrate of an integrated circuit chip, comprising, in the substrate, implanted resistors (31, 33, 35, 37; 41, 43, 45, 47) connected as a Wheatstone bridge, wherein each of two first opposite resistors (35, 37; 45, 47) of the bridge is covered with an array (21) of metal lines parallel to a first direction, the first direction being such that a variation in the substrate stress along this direction causes a variation of the unbalance value (V_{OUT}) of the bridge.

2. The device of claim 1, wherein each of two second opposite resistors (41, 43) of the bridge is covered with an array of metal lines parallel to a second direction orthogonal to the first direction.

3. The device of claim 1, wherein the first two opposite resistors (35, 37) have the shape, in top view, of parallel rectangular bars, the metal lines (21) extending along the length of said bars.

4. The device of claim 2, wherein the implanted resistors (41, 43, 45, 47) have, in top view, a square shape.

5. The device of any of claims 1 to 4, wherein the implanted resistors comprise a doped region of a first conductivity type formed in a region of the second conductivity type.

6. The device of any of claims 1 to 5, wherein the metal lines are made of copper.

7. The device of any of claims 1 to 5, wherein the metal lines are made of aluminum.
